(19) Europäisches Patentamt
European Patent Office
Office européen des brevets

(11) EP 1 666 954 A1

(12) **EUROPEAN PATENT APPLICATION**
published in accordance with Art. 158(3) EPC

(43) Date of publication:
07.06.2006 Bulletin 2006/23

(51) Int Cl.:
*G02F 1/035* (1990.01)

(21) Application number: 04772548.6

(86) International application number:
PCT/JP2004/012592

(22) Date of filing: 25.08.2004

(87) International publication number:
WO 2005/029165 (31.03.2005 Gazette 2005/13)

(84) Designated Contracting States:
DE FR GB

(30) Priority: 17.09.2003 JP 2003324373

(71) Applicant: NGK INSULATORS, LTD.
Nagoya-City, Aichi Pref. 467-8530 (JP)

(72) Inventors:
• AOKI, Kenji,
c/o NGK Insulators, Ltd.
Nagoya-city, Aichi 467-8530 (JP)

• MITOMI, Osamu,
c/o NGK Insulators, Ltd.
Nagoya-city, Aichi 467-8530 (JP)
• KONDO, Jungo,
c/o NGK Insulators, Ltd.
Nagoya-city, Aichi 467-8530 (JP)
• KONDO, Atsuo,
c/o NGK Insulators, Ltd.
Nagoya-city, Aichi 467-8530 (JP)

(74) Representative: TBK-Patent
Bavariaring 4-6
80336 München (DE)

(54) **OPTICAL MODULATOR**

(57) An optical modulator 1C has a substrate 2 of an electro-optic material and having first and second main faces, an optical waveguide formed on the substrate 2 and having first branched part 5 and a second branched part 3, and ground electrodes 4A, 4C and a signal electrode 4B provided on the side of the first main face of the substrate. The first branched part 5 and second branched part 3 are provided between the edges of the ground electrodes 4A, 4C and the edge of the signal electrode 4B, respectively. Microwave electric fields are applied onto interacting parts of the first branched part 5 and second branched part 3, respectively, to modulate light propagating in the first branched part 5 and second branched part 3, respectively. The integral values of field intensities over interaction lengths with electrodes in the first and second branched parts are different from each other so that a predetermined chirp amount is obtained.

FIG 3

**Description**

Field of the Invention

The present invention relates to an optical modulator.

BACKGROUND OF THE INVENTION

The assignee filed a Japanese patent publications 10- 133, 159A and 2002- 169133A, disclosing a traveling wave optical modulator with a substrate having a thinner portion with a thickness of, for example, not more than 10 μm under an optical waveguide. It is thereby possible to realize high-speed modulation without forming a buffer layer made of silicon dioxide, and to advantageously reduce the product "Vπ· L" of a driving voltage "Vπ" and a length of an electrode "L".

DISCLOSURE OR THE INVENTION

According to traveling wave type optical modulators described in Japanese patent publications 10-133159A and 2002-169133A, for example, a CPW (coplanar type) electrode pattern and Mach-Zehnder type optical waveguide are formed on an X-cut lithium niobate. The applied electric fields onto branched parts of the optical waveguide as well as the lengths of the interacting parts with electrodes are adjusted to be the same, so as to obtain an optical modulator of zero chirp property.

According to actual optical communication system, however, it might be a case where a predetermined chirp amount is advantageously imparted even for an optical modulator using an X-cut or Y-cut as a substrate. It has not been, however, studied to impart such predetermined chirp amount onto an optical modulator using the X-cut or Y-cut made of an electro-optic crystal.

An object of the present invention is to provide an optical modulator having a substrate comprising an electro-optic material and first and second main faces, an optical waveguide formed on the substrate and having first and second branched parts, and ground and signal electrodes provided on the side of the first main face of the substrate, whose chirp amount can be controlled at an appropriate value.

The present invention provides an optical modulator comprising a substrate comprising an electro-optic material and first and second main faces, an optical waveguide formed on the substrate and having first and second branched parts, and ground and signal electrodes provided on the side of the first main face of the substrate. The first branched part and second branched part are provided in an electrode gap defined between the ground and signal electrodes. Microwave electric fields are applied onto interacting parts with electrodes of the first and second branched parts, respectively, to modulate light propagating in the first and second branched parts. Integral values of field intensities over interaction lengths with electrodes in the first and second branched parts are different from each other so that a predetermined chirp amount is obtained.

The present invention further provides an optical modulator comprising a substrate comprising an electro-optic material and first and second main faces, an optical waveguide formed on the substrate and having first and second branched parts, and ground and signal electrodes provided on the side of the first main face of the substrate. The first branched part is provided in an electrode gap defined between the ground and signal electrodes. The second branched part is provided under the ground electrode. Microwave electric fields are applied onto interacting parts with electrodes of the first and second branched parts, respectively, to modulate light propagating in the first and second branched parts, respectively.

The present invention will be further described in detail.

First, "chirp amount " will be described. "Chirp amount" is also called as "chirp parameter α".

Respective integral values $A_1$ and $A_2$ of electric field intensities Ex(z) by interaction lengths with electrodes "z" are calculated for two branched parts (optical waveguides) "a" and "b", respectively, of an optical modulator. The interaction length with electrode of the electric field intensities of the branched part means a value obtained by integrating the electric fields Ex(z) at the respective points "z" of the branched part over the whole length "L" of the branched part. The integral value is given as follows.

$$\int_0^L E_x(z)\,dz$$

For example, according to Japanese Patent publication 07-064031A, a parameter "$\alpha$" representing chirp is indicated as follows.

$$\alpha = -\cot(\Delta\beta L) \cdot \frac{1+m}{1-m}$$

$$m = \frac{\Delta n_1}{\Delta n_2}$$

$$\Delta\beta = \frac{\beta_1 - \beta_2}{2}$$

$\Delta\beta L$ is normally $\pi/4$ or $-\pi/4$, and thus $\cot(\Delta\beta L)=1$ or $-1$. $\Delta n_1$ and $\Delta n_2$ represent changes of refractive indices in the waveguides "a" and "b". The average change of refractive index is proportional to the following.

$$\int_0^L E_x(z)\,dz$$

The following equation is thus satisfied.

$$m = \frac{\Delta n_1}{\Delta n_2} = \frac{A_1}{A_2}$$

According to prior X-cut LN optical modulators, a symmetrical pattern is normally applied with respect to the center electrode, so that both of the optical waveguide arms have the same interaction length. The formula of "$A_1 = -A_2$" is thus satisfied, so that m equals $-1$ and the chirp amount $\alpha$ equals 0. It has been thus impossible to give a solution in cases where a predetermined chirp amount is necessary in an optical modulator in various kinds of optical communication systems.

According to the present invention, in such type of an optical modulator, the respective integral values of the electric field intensities over the interaction lengths with electrodes in the first and second branched parts are made different from each other. The optical modulator is thus adjusted so that a predetermined chirp amount is obtained.

BRIEF DESCRIPTION OF THE DRAWINGS

Fig. 1 is a cross sectional view schematically showing an optical modulator 1A according to an embodiment of the present invention, where an electrode gap 20A has a width smaller than that of an electrode gap 20B.

Fig. 2 is a cross sectional view schematically showing an optical modulator 1B according to another embodiment of the present invention, where an electrode gap 20A has a width smaller than that of an electrode gap 20B.

Fig. 3 is a plan view schematically showing an optical modulator 1C according to still another embodiment of the present invention, where a part 5c of a branched part 5 is provided direct under a ground electrode 4C.

Fig. 4 is a cross sectional view schematically showing an optical modulator 1D according to still another embodiment of the present invention, where a branched part 3 is provided on the side of a thinner part 12d and a branched part 5 is provided on the side of a thicker part 12c.

Fig. 5 is a cross sectional view schematically showing an optical modulator 1E according to still another embodiment of the present invention, where low dielectric parts 10A and 10B are provided under a substrate 2.

Fig. 6 is a cross sectional view schematically showing an optical modulator 11 according to still another embodiment of the present invention, where a branched part 14 is provided in an electrode gap 25 and a branched part 15 is provided under a ground electrode 17B.

Fig. 7 is a cross sectional view schematically showing an optical modulator IF according to still another embodiment of the present invention, where a substrate 32 has a base part 32d and thinner parts 32b and 32c having thicknesses different from each other.

BEST MODES FOR CARRYING OUT THE INVENTION

According to a preferred embodiment, microwave electric field is applied to each of first and second branched parts so that the intensities of the electric fields are different from each other. The integral values of the electric field intensities over the interaction length with electrode are made different from each other. Specific examples for this are not particularly limited. Preferably, plurality of ground electrodes is provided so that the widths of the electrode gaps of the signal and ground electrodes are made different from each other. When the width of the first electrode gap is made different from that of the second electrode gap, the electric field intensity in the branched parts under the respective electrode gaps are also different from each other.

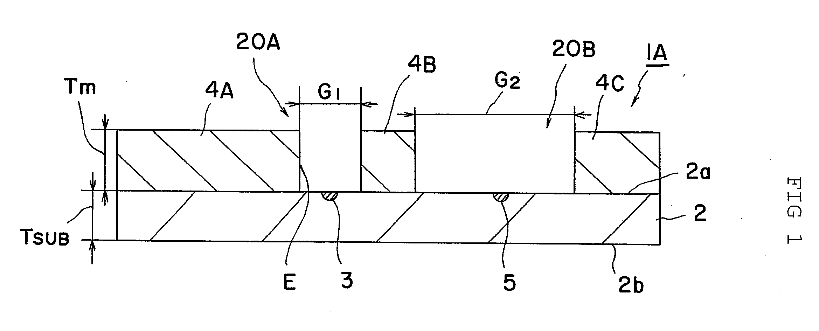

Fig. 1 is a cross sectional view schematically showing an optical modulator 1A according to this embodiment. The optical modulator 1A has a substrate 2, for example, of a shape of a flat plate. Branched parts 3 and 5 are provided on the side of a first main face 2a of the substrate 2. Further, a signal electrode 4B and ground electrodes 4A and 4C of, for example, coplanar type is provided on the main face 2a. The branched part 3 is positioned in an electrode gap 20A and the branched part 5 is positioned in an electrode gap 20B. Although electrode configuration of so called Coplanar waveguide (CPW electrode) is applied according to the present example, the configuration of electrodes is not particularly limited. The present invention may be applied to electrode configuration of so-called ACPS type (Asymmetric coplanar strip-line type).

According to the present example, the branched parts 3 and 5 are formed between the ground electrode 4A and center electrode 4B and between the center electrode 4B and ground electrode 4C, respectively, so that signal voltages are applied onto the branched parts 3 and 5, respectively, substantially in horizontal direction. The optical waveguide constitutes an optical waveguide of so-called Mach-Zehnder type.

By applying such design, the electric field intensity applied onto the branched part 5 is relatively large in the narrower electrode gap 20A, so that the integral value of the field intensity over the interaction length with electrode becomes larger. The electric field intensity applied onto the branched part 5 is smaller in the wider electrode gap 20B. It is thus possible to adjust the chirp amount of the optical modulator 1A at a desired value.

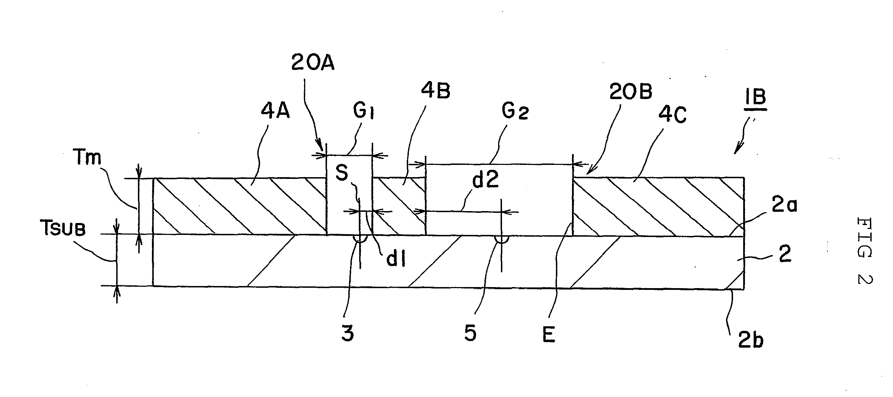

According to the present embodiment where the widths of the two electrode gaps are made different (for example Figs. 1 and 2), on the viewpoint of increasing the chirp amount of the optical modulator, a difference of $G_1$ and $G_2$ may preferably be 3 micrometer or larger, and more preferably be 20 micrometer or larger. $G_1$ may preferably be 100 micrometer or smaller and more preferably be 40 micrometer or smaller, for reducing the overall VπL. $G_1$ and $G_2$ may preferably be 1 micrometer or larger and more preferably 3 micrometer or larger, for preventing the conduction of the signal and ground electrodes.

The following quasi TEM wave analysis was carried out applying FEM for the verification. $G_1$ was set at 20 μm. The width of the signal electrode 4B was set at 30 μm, the substrate 2 was made of lithium niobate single crystal, and the thickness Tsub was made 8 μm. The thickness Tm of the electrode was made 26 μm. $G_2$ of the wider electrode gap 20B is variously changed in a range of 30 to 100 μm as shown in table 1. The impedance Zc, the overall VπL, VπL1 of the branched part 3, VπL2 of the branched part 5, and chirp amount (α-para) were calculated. The results were shown in table 1.

As can be seen from table 1, the chirp amount α of the optical modulator can be appropriately controlled in a wide range by changing the width G2 of the electrode gap 20B.

Table 1

| G2 | nm | Zc | Overall VπL | VπL1 | VπL2 | α-para |
|---|---|---|---|---|---|---|
| 30 | 2.22 | 36 | 7.6 | 13 | 18.6 | 0.18 |
| 40 | 2.21 | 38 | 8.4 | 13 | 24.2 | 0.3 |

Table continued

| G2 | nm | Zc | Overall VπL | VπL1 | VπL2 | α-para |
|----|-----|----|-------------|------|------|--------|
| 50 | 2.21 | 40 | 9.1 | 13 | 30 | 0.4 |
| 60 | 2.21 | 41 | 9.5 | 13 | 36.1 | 0.47 |
| 70 | 2.21 | 42 | 9.9 | 13 | 42.4 | 0.53 |
| 80 | 2.21 | 43 | 10.2 | 13 | 48.9 | 0.58 |
| 90 | 2.21 | 43 | 10.5 | 13 | 55.8 | 0.62 |
| 100 | 2.21 | 44 | 10.7 | 13 | 62.9 | 0.66 |

Further, according to a preferred embodiment, the first branched part is positioned in the proximity of the edge of the signal or ground electrode in the narrower electrode gap. For example, in the case of the optical modulator 1B shown in Fig. 2, the branched part 3 is positioned in the proximity of an edge "E" of the signal electrode 4B or edge "E" of the ground electrode 4A in the narrower electrode gap 20A. A relatively higher electric field is applied onto the branched part 3 on the side of the narrower electrode gap 20A. The branched part 3a is positioned in the proximity of the edge "E" of the signal electrode 4B or the edge "E" of the ground electrode 4A, so as to improve the field intensity applied on the branched part 3a. The chirp amount can be thus adjusted in a larger range and the product VπL of driving voltage and electrode length can be lowered.

On the viewpoint, a distance d1 of the central line "S" of the branched part 3 and the signal electrode or ground electrode may preferably be 20 micrometer or smaller, and more preferably be 10 micrometer or smaller.

Further, the distance of the branched part 5 and the ground or signal electrode may preferably be larger in the wider electrode gap 20B, for further elevating the chirp amount of an optical waveguide. It is thus possible to minimize the electric field intensity applied on the branched part 5 and elevate the chirp amount of the optical modulator. On the viewpoint, the distance d2 (smaller one) of the branched part and the ground or signal electrode may preferably be 10 micrometer or larger and more preferably be 20 micrometer or larger.

Further, according to a preferred embodiment, the first and second branched parts have interaction lengths with electrodes different from each other. It is thus possible that the integral values of electric field intensities over the interaction lengths with electrodes can be made different from each other. This is because the larger the interaction length "L" with electrode, the larger the integral value, provided that the field intensity is substantially the same.

More preferably in the present embodiment, a part of the first branched part is positioned under the signal or ground electrode so that the interaction length with electrode of the first branched part can be made shorter that that of the second branched part.

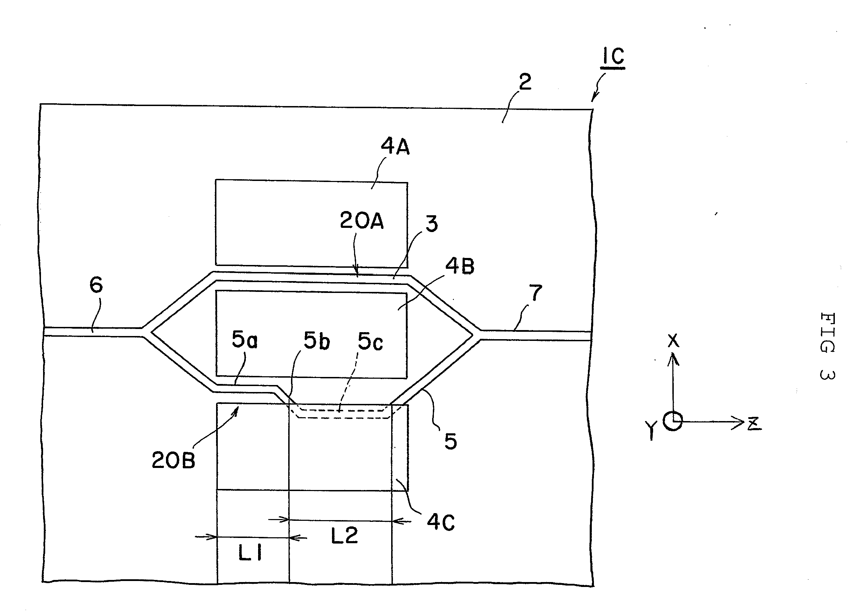

Fig. 3 is a plan view schematically showing an optical modulator 1C according to this embodiment. According to the optical modulator 1C, Mach-Zehnder type optical waveguides 6, 7, 3 and 5 are provided on a substrate 2. The second branched part 3 is formed in an electrode gap 20A of a signal electrode 4B and a ground electrode 4A, so that a uniform electric field Ex is applied over the whole length "L" (substantially L1 + L2). Contrary to this, electric field of substantially uniform intensity is applied over the whole length of a part 5a in an electrode gap 20B of the first branched part 5. Further, an electric field is applied to an inclined part 5b. In the covered part under the ground electrode 4C, however, an electric field is not applied in the x direction (shown in paper face). As a result, although a predetermined electric field is applied on the branched part over the length of "L1", substantially no electric field is applied over the length of "L2", so that the integral value becomes smaller. For example, for obtaining a chirp amount α of 0.6, it is needed to make the ratio of the integral values at about 1:4. For the goal, it is required that the ratio (L:L1) of the interaction lengths with electrode of the branched parts 3 and 5 is made 1:4.

When the interaction lengths with electrodes of the branched parts 3 and 5 are made different from each other, the widths of the electrode gaps may be made different from each other, or the distances of the branched parts and the electrode edges may be made different from each other. It is thus possible to control the chirp amount of the optical modulator in a still wider range.

Further, according to still another embodiment, a plurality of ground electrodes are provided. Moreover, the thickness of a substrate under an electrode gap of a signal electrode and a first ground electrode and the thickness of the substrate under an electrode gap of the signal electrode and a second ground electrode are made different from each other. The electric field intensity applied on the branched part in the electrode gap on the side of the thicker region of the substrate is different from that on the side of the thinner region of the substrate. It is thus possible that the integral values can be made different from each other.

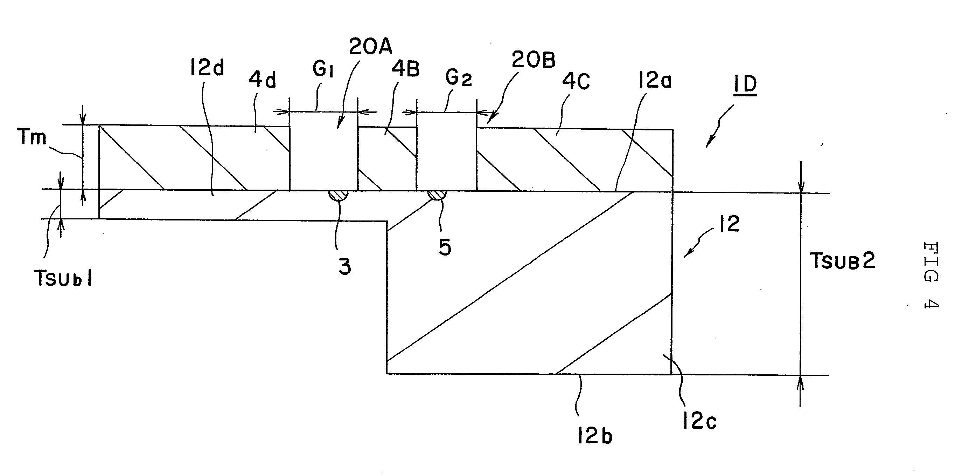

Fig. 4 is a cross sectional view schematically showing an optical modulator 1D according to this embodiment. Structural parts and dimensions already shown in Fig. 1 are depicted using the same numerals and the description is referred to. According to the present example, a substrate 12 has a thicker part 12c having a larger thickness and a thinner part 12d having a smaller thickness. 12a and 12b represent the main faces. An electrode gap 20A is provided on the side of the thinner part 12d and the electrode gap 20B is provided on the side of the thicker part 12c. As described above, a difference of the thickness Tsub1 of the thinner part 12d and the thickness Tsub 2 of the thicker part 12c may preferably be 2 micrometer or more and more preferably be 20 micrometer or more, for obtaining different integral values for the branched parts 3 and 5. Further, on the viewpoint of high speed modulation, Tsub1 may preferably be 20 micrometer or lower.

Further, according to a preferred embodiment, a plurality of ground electrodes is provided. A first low dielectric part is provided under a substrate and under an electrode gap between a signal electrode and a first ground electrode, and a second low dielectric part is provided under the substrate and under an electrode gap between the signal electrode and a second ground electrode. The dielectric constant of the first low dielectric part is made different from that of the second low dielectric part. When the dielectric constants of the low dielectric parts under the substrate are different from each other, the electric field intensities applied onto the branched parts are also different from each other. The integral values in the branched parts can be thus made different from each other.

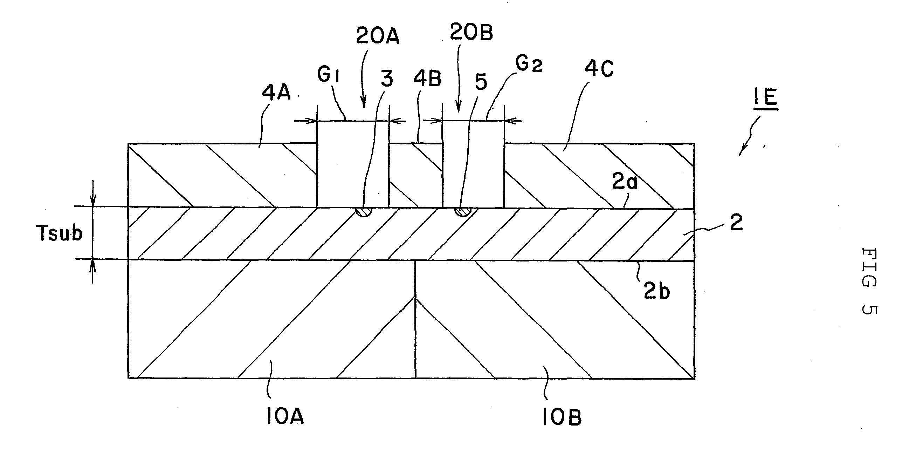

Fig. 5 is a cross sectional view schematically showing an optical waveguide 1E according to this embodiment. Structural parts and dimensions already shown in Fig. 1 are depicted using the same numerals and the description is referred to. According to the present example, a first low dielectric part 10A and a second low dielectric part 10B are provided under the substrate 2. An electrode gap 20A is provided on the side of the low dielectric part 10A, and an electrode gap 20B is provided on the side of the low dielectric part 20B. As described above, for the branched parts 3 and 5 having integral values different from each other, the ratio of the dielectric constant of the low dielectric part 10A and that of the low dielectric part 10B may preferably be 2 times or larger, and more preferably be 5 times or larger.

Further, according to an optical modulator of another invention, a first branched part is provided in an electrode gap between a ground electrode and a signal electrode, and a second branched part is provided under a ground electrode. Microwave electric field is applied on each of the interacting parts with electrode of the first and second branched parts to modulate light propagating the first and second branched parts, respectively. The first branched part is positioned in the electrode gap so that the chirp amount can be appropriately adjusted.

Further, when one side driving is applied in a prior optical modulator using a Z-cut, the electric field strengths applied onto the two branched parts are different from each other, so that the chirp amount ($\alpha$-para) is typically about 0.6 to 0.7. However, a smaller $\alpha$ may be preferable depending on an applied optical communication system. It is thus preferred that the chirp amount can be adjusted at an appropriate value for an applied system.

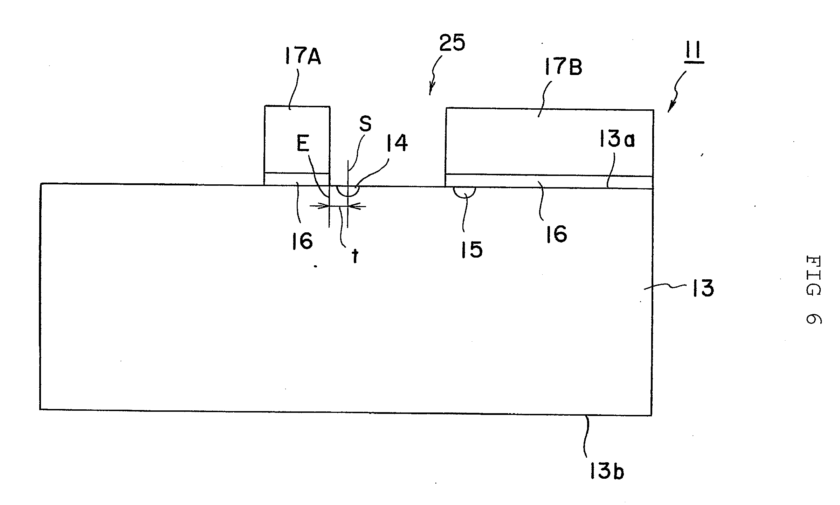

Fig. 6 is a cross sectional view schematically showing an optical modulator 11 according to this embodiment. A first branched part 14 and a second branched part 15 of Mach-Zehnder type optical waveguide are formed on the main face 13a of a substrate 13. 13b represents a bottom face of the substrate 13. The branched part 15 is provided under a signal electrode 17B with a buffer layer 16 interposed between them. An electrode gap 25 is provided between a signal electrode 17A and a ground electrode 17B. The branched part 14 is extended into the electrode gap 25, and the central line "S" of the branched part 14 is provided outside of the edge "E" of the signal electrode 17A by a distance of "t". The branched part 14 and signal electrode 17A are separated with the buffer layer 16.

It is possible to change the electric field intensity applied on the branched part 14 by changing the distance "t" of the central line "S" of the branched part 14 and the edge "E" of the signal electrode 17A. It is thus possible to change the chirp amount of the optical modulator 11. When "t" is made smaller, the electric field intensity applied on the branched part 14 can be increased. When "t" is made larger, the electric field intensity applied on the branched part 14 can be lowered. "t" may preferably be 20 micrometer or smaller and more preferably be 10 micrometer or smaller, for effectively modulating light in the branched part 14. Further, "t" may preferably be 0.5 micrometer or larger and more preferably be 1 micrometer or larger, on the viewpoint of lowering the chirp amount.

According to this embodiment, an electric field may preferably be applied on each branched part in the direction substantially perpendicular to the main face of the substrate.

According to a preferred embodiment, the thickness of the substrate is 30 $\mu$m or smaller at least in a region of interaction length with electrode. Moreover, the substrate has a base part having a thickness of 30 $\mu$m or larger, preferably 200 $\mu$m or larger, and a recess is formed inside of the base part. According to such substrate, it is possible to realize high speed modulation while imparting a mechanical strength suitable to handling.

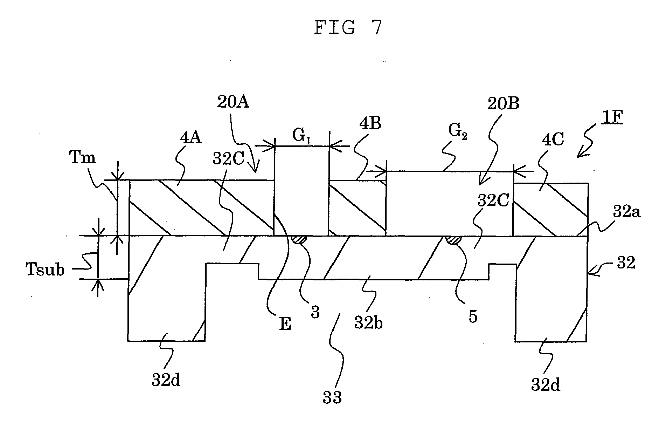

According to this embodiment, preferably, the substrate has a first thinner part having a relatively larger thickness and facing the recess and a second thinner part having a smaller thickness and facing the recess, and the optical waveguide is provided in the first thinner part. This type of substrate may be comprised of main bodies described in Japanese patent publication 10-133159A and 2002-169133A. For example, a substrate 32 shown in Fig. 7 has a base part 32d, a first thinner part 32b facing a recess 33 and having a relatively larger thickness and a second thinner part 32c facing the recess 33 and having a smaller thickness. The optical waveguide is provided in the first thinner part 32b. 32a represents a main face of the substrate.

The bottom faces of the substrates 2, 12 and 13 may be joined with a separate supporting body through a joining layer.

The material forming the optical waveguide substrates 2, 12 and 13 are made of a ferroelectric electro-optic material and may preferably of a single crystal. Although such crystal is not particularly limited as far as the modulation of light is possible, the crystal includes lithium niobate, lithium tantalite, a solid solution of lithium niobate-lithium tantalite, potassium lithium niobate, KTP, GaAs and quartz.

The materials of the ground and signal electrodes are not particularly limited as far as the material has a low resistance and is excellent in impedance characteristic, and may be composed of gold, silver, copper or the like.

The buffer layer may be made of known materials such as silicon oxide, magnesium fluoride, silicon nitride and alumina.

The optical waveguides are provided in the main body and preferably on the side of the first main face of the main body. The optical waveguide may be a ridge type optical waveguide directly formed on the first main face of the main body, or a ridge type optical waveguide formed on another layer on the first main face of the main body, or an optical waveguide formed by inner diffusion or ion exchange process inside of the main body, such as titanium diffusion or proton exchange optical waveguide. The electrodes are provided on the side of the first main face of the main body. The electrodes may be formed directly on the first main face of the main body, or may be formed on a buffer layer.

The term "low dielectric part" described above means a part having a dielectric constant lower than that of the electro-optic material forming the main body. (Dielectric constant of the low dielectric part) /(dielectric constant of the electro-optic material forming the substrate) may preferably be 1/3 or smaller and more preferably be 1/10 or smaller.

The low dielectric part may be a space. Alternatively, the low dielectric part may be made of a solid material having a dielectric constant lower than that of the electro-optic material forming the substrate. Such material includes alumina, aluminum nitride, lithium niobate, lithium tantalite, gallium arsenide and silicon oxide.

Further, the low dielectric portion may be made of an adhesive. Although the kind of the adhesive is not particularly limited, the thickness may preferably be 300 $\mu$ m or smaller. Further, the material suitably used for the low dielectric layer may preferably be a material having a low dielectric loss (low tan $\delta$), on the viewpoint of reducing the propagation loss of a high frequency modulation signal. Such material having a low dielectric loss and low dielectric constant includes Teflon and an acrylic resin adhesive. Further, as another materials having low dielectric constants include a glass adhesive, an epoxy resin adhesive, a layer insulating material used for producing semiconductors and a polyimide resin adhesive.

**Claims**

1. An optical modulator comprising a substrate comprising an electro-optic material and first and second main faces, an optical waveguide formed on said substrate and having first and second branched parts, and ground and signal electrodes provided on the side of said first main face of said substrate,
   wherein said first branched part and second branched part are provided in electrode gaps defined between said ground and signal electrodes, respectively;
   wherein microwave electric fields are applied onto interacting parts with electrodes of said first and second branched parts, respectively, to modulate light propagating in said first and second branched parts, respectively; and
   wherein integral values of electric field intensities over interaction lengths with electrodes in said first and second branched parts are different from each other so that a predetermined chirp amount is obtained.

2. The optical modulator of claim 1, wherein said microwave electric fields applied on said first and second branched parts comprise intensities different from each other.

3. The optical modulator of claim 2, comprising a plurality of said ground electrodes, wherein said electrode gaps between said signal electrode and said ground electrodes comprise widths different from each other.

4. The optical modulator of claim 3, wherein said first branched part is positioned near the edge of said signal electrode or said ground electrode, in said electrode gap having a smaller width selected from said electrode gaps.

5. The optical modulator of claim 1, wherein said first and second branched parts comprise interaction lengths with electrodes different from each other.

6. The optical modulator of claim 5, wherein a part of said first branched part is positioned right under said signal electrode or said ground electrode so that the interaction length with electrode of said first branched part is made shorter than that of said second branched part.

**7.** The optical modulator of any one of claims 1 to 6, wherein said substrate has a thickness of 30 $\mu$m or smaller in said interacting part with electrode.

**8.** The optical modulator of claim 1, comprising a plurality of said ground electrodes, wherein the thickness of said substrate under said electrode gap of said signal electrode and one of said ground electrodes and the thickness of said substrate in said electrode gap of said signal electrode and another of said ground electrodes are different from each other.

**9.** The optical modulator of claim 1, comprising a plurality of said ground electrodes, wherein a first low dielectric part is provided under said substrate and under said electrode gap of said signal electrode and one of said ground electrodes, wherein a second low dielectric part is provided under said substrate and under said electrode gap of said signal electrode and another of said ground electrodes, and wherein said first and second low dielectric parts comprise dielectric constants different from each other.

**10.** An optical modulator comprising a substrate comprising an electro-optic material and first and second main faces, an optical waveguide formed on said substrate and having first and second branched parts, and ground and signal electrodes provided on the side of said first main face of said substrate,
wherein said first branched part is provided in an electrode gap defined between said ground and signal electrodes;
wherein said second branched part is provided under said ground electrode; and
wherein microwave electric fields are applied onto interacting parts with electrodes of said first and second branched parts, respectively, to modulate light propagating in said first and second branched parts, respectively.

FIG 1

FIG 2

EP 1 666 954 A1

FIG 3

FIG 4

FIG 5

FIG 6

17A

25

17B

11

E    S    14

13a

16         t

16

15

16

13

13b

FIG 7

<div align="center"><b>INTERNATIONAL SEARCH REPORT</b></div>

| | International application No. |
|---|---|
| | PCT/JP2004/012592 |

**A. CLASSIFICATION OF SUBJECT MATTER**
Int.Cl⁷ G02F1/035

According to International Patent Classification (IPC) or to both national classification and IPC

**B. FIELDS SEARCHED**

Minimum documentation searched (classification system followed by classification symbols)
Int.Cl⁷ G02F1/03

Documentation searched other than minimum documentation to the extent that such documents are included in the fields searched

| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-505337 A  (Integrated Optical Components Ltd.),<br>18 May, 1999 (18.05.99),<br>& GB 9510051 A        & WO 96/036901 A2<br>& GB 2315129 A        & EP 827598 A<br>& US 6052496 A1 | 1-6,10<br>7,8,9 |
| X<br>Y | JP 08-086991 A1  (Fujitsu Ltd.),<br>02 April, 1996 (02.04.96),<br>(Family: none) | 1-5<br>6-10 |
| Y | JP 2002-357797 A  (NGK Insulators, Ltd.),<br>13 December, 2002 (13.12.02),<br>& EP 1245993 A        & US 2002/0159738 A1 | 7-9 |

☒  Further documents are listed in the continuation of Box C. ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>29 November, 2004 (29.11.04) | Date of mailing of the international search report<br>14 December, 2004 (14.12.04) |
|---|---|
| Name and mailing address of the ISA/<br>Japanese Patent Office | Authorized officer |
| Facsimile No. | Telephone No. |

Form PCT/ISA/210 (second sheet) (January 2004)

<table>
<tr><td colspan="2" align="center">**INTERNATIONAL SEARCH REPORT**</td><td>International application No.<br>PCT/JP2004/012592</td></tr>
</table>

| C (Continuation). DOCUMENTS CONSIDERED TO BE RELEVANT |||
| Category* | Citation of document, with indication, where appropriate, of the relevant passages | Relevant to claim No. |
| Y | CD-ROM of the specification and drawings annexed to the request of Japanese Utility Model Application No. 44454/1991(Laid-open No. 137322/1992)<br>(Yokogawa Electric Corp.),<br>21 December, 1992 (21.12.92),<br>(Family: none) | 8,9 |

Form PCT/ISA/210 (continuation of second sheet) (January 2004)